# FASCICULE DE BREVET EUROPEEN

(11) **EP 1 529 432 B1**
(45) Date de publication et mention de la délivrance du brevet: **17.01.2007**
(21) Numéro de dépôt: 04300752.5
(22) Date de dépôt: 02.11.2004
(51) Int. Cl.: A01C 7/20

(54) **Semoir avec un dispositif de réglage**
Sämaschine mit einer Einstellvorrichtung
Seeder with an adjusting device

(30) Priorité: 06.11.2003 FR 0313047
(43) Date de publication de la demande: 11.05.2005
(73) Titulaire: Kuhn-Nodet S.A., 77876 Montereau (FR)
(72) Inventeur: Constant, Olivier, 77130 Misy sur Yonne (FR)
(74) Mandataire: Andres, Jean-Claude

(56) Documents cités:
- EP-A- 0 313 834
- EP-A- 0 974 252
- DE-A- 3 633 542
- GB-A- 2 042 314
- GB-A- 2 177 885

## Description

La présente invention se rapporte au domaine technique général du machinisme agricole. Elle concerne plus particulièrement un semoir comportant un châssis présentant une poutre transversale et des éléments d'implantation de la semence dans le sol, lesquels étant constitués :
* de socs de semis disposés suivant au moins deux rangées sensiblement orthogonales à la direction d'avance ;
* de bras de liaison courts supportant chacun un soc de semis appartenant à l'une desdites rangées, chaque bras de liaison court étant lié à ladite poutre transversale au moyen d'une première articulation respective ;
* de bras de liaison longs supportant chacun un soc de semis appartenant à l'autre rangée, chaque bras de liaison long étant lié à ladite poutre transversale au moyen d'une deuxième articulation respective ;
* lesdites premières et deuxièmes articulations comportant un axe longitudinal sensiblement horizontal et orthogonal à la direction d'avance, chaque articulation permettant auxdits bras de liaison correspondant un débattement vers le haut et vers le bas ; et
* une butée commune limitant le déplacement de l'ensemble des socs de semis (11) vers le bas.

Un tel semoir est notamment connu par l'intermédiaire du document **EP 0 974 252**. Ce semoir comporte dans les grandes lignes, un châssis, une trémie destinée à contenir la semence et des éléments d'implantation de la semence dans le sol.

Ces éléments d'implantation comportent des socs disposés suivant deux rangées sensiblement orthogonales à la direction d'avance et des bras de liaison longs supportant chacun un soc appartenant à la deuxième rangée et des bras de liaison courts supportant chacun un soc appartenant à la première rangée, ladite première rangée étant située devant ladite deuxième rangée.

Ce semoir connu comporte en sus une butée commune, réalisée par une barre, limitant le déplacement de l'ensemble des socs vers le bas, et un moyen de réglage commun agissant sur l'ensemble des éléments d'implantation de manière à limiter le débattement de l'ensemble des socs vers le bas de la même valeur lors du réglage. La barre est déplacée en hauteur via le moyen de réglage commun permettant rapidement de modifier la profondeur de travail maximum de l'ensemble des socs. Le réglage est réalisé à l'aide d'une bielle, d'un secteur à trous et d'un boulon. La bielle est solidaire de la barre et est d'une part articulée sur le châssis. Le châssis comporte un secteur à trous composé de plusieurs trous, lesquels sont disposés en arc de cercle. Le boulon est destiné à solidariser la bielle dans un des trous du secteur à trous. Les différents trous permettent de modifier la profondeur de travail des socs de semis. Le semoir comporte à cet effet au moins deux bielles et deux secteurs à trous pour assurer un réglage uniforme sur toute la largeur du semoir.

La modification de la profondeur de travail des éléments d'implantation se fait par palier. La modification doit se faire pour toutes les bielles, l'une après l'autre. Pour le réglage de la pression de terrage, le semoir est équipé de tiges et d'éléments élastiques liés aux bras de liaison. Le réglage est individuel ou commun à l'ensemble des éléments d'implantation. Un tel semoir est également connu par l'intermédiaire du document DE 36 33 542.

Le but de la présente invention est de remédier à cet inconvénient tout en assurant un bon fonctionnement du semoir et à un moindre coût. Il faudra notamment réaliser un semoir pour lequel d'une part, le réglage de la pression de terrage soit effectué de manière centralisée et la variation obtenue soit identique sur les différentes rangées. Le réglage de la pression de terrage devra être continu, rapide et facile à mettre en oeuvre pour garantir un placement optimal de la semence dans le sol. D'autre part, le réglage de la profondeur de travail maximale devra aussi être centralisé, continu et aisé d'utilisation.

A cet effet, le semoir selon l'invention est caractérisé en ce qu'il est prévu un dispositif de réglage de la pression de terrage constitué d'un arbre pivot d'axe longitudinal s'étendant sur toute la largeur du semoir et d'éléments élastiques liant les bras de liaison audit arbre pivot et que ladite butée commune est réalisée par ledit arbre pivot.

D'autres objets et caractéristiques de l'invention ressortiront de la description ci-après avec référence aux dessins annexés qui représentent, à titre d'exemple non limitatif, une forme de réalisation du semoir selon l'invention.

Sur ces dessins :
- la **figure 1** représente une vue latérale d'un semoir conforme à l'invention ;
- la **figure 2** représente une vue de dessus du semoir de la figure 1 ;
- la **figure 3** est une vue de côté dans le sens de la flèche III de la figure 2 ;
- la **figure 4** est une vue de côté dans le sens de la flèche IV de la figure 2 ;
- la **figure 5** est une vue de côté dans le sens de la flèche V de la figure 2.

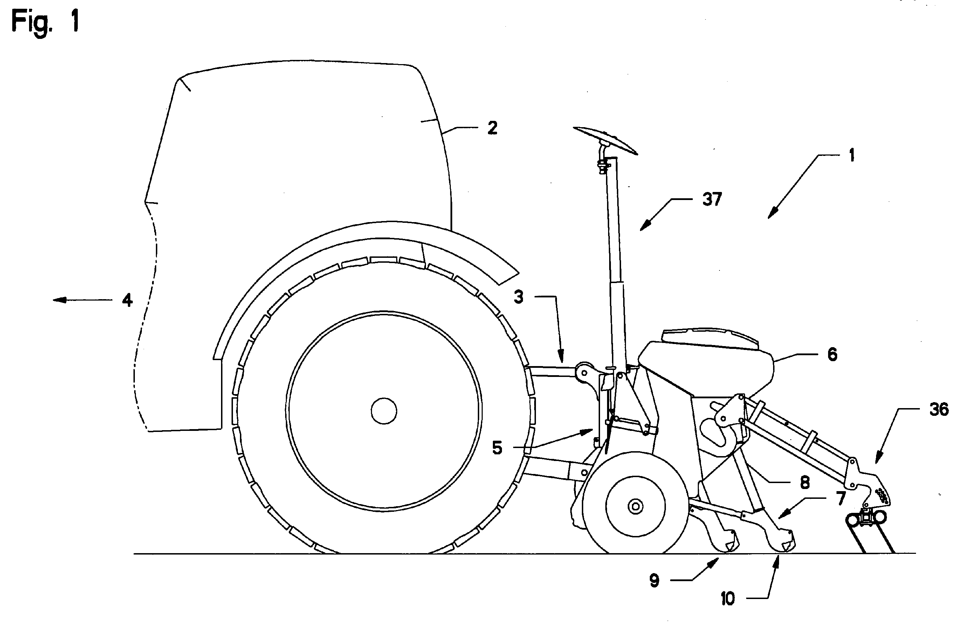

La machine agricole de travail du sol représentée sur les figures correspond à un semoir (1). Il s'agit plus précisément d'un semoir du type en lignes comme représenté à la figure 1. Ce semoir (1) est lié à un tracteur (2) par l'intermédiaire d'un dispositif d'attelage trois points (3), connu de l'homme du métier. Le semoir (1) est ainsi déplacé suivant une direction et un sens d'avance indiqué par la flèche (4) dans un champ à ensemencer. Dans la suite de la description, les notions "avant" et "arrière", "devant" et "derrière" sont définies par rapport au sens d'avance (4) et les notions "droite" et "gauche" sont définies en regardant ledit semoir (1) de l'arrière dans ledit sens d'avance (4).

Ce semoir (1) peut également être attelé à l'arrière d'une machine de travail du sol par exemple une herse rotative. Cette combinaison permettra de préparer le lit de semence et de semer en une seule passe. La herse rotative est alors placée entre le tracteur (2) et le semoir (1). Cet exemple de réalisation n'est pas représenté sur les figures.

Le semoir (1) de la figure 1 comporte, dans les grandes lignes, un châssis (5) sur lequel est placée une trémie (6). Les graines contenues dans ladite trémie (6) sont introduites dans le sol par l'intermédiaire d'éléments d'implantation (7). Chaque élément d'implantation (7) est relié à un dispositif de dosage de la semence (non représenté), situé sous la trémie (6), permettant de régler précisément la quantité de semence déposée en terre. La semence est acheminée dudit dispositif de dosage vers les éléments d'implantation (7) au moyen d'un tube d'alimentation (8) respectif. Un tel dispositif de dosage de semence est connu de l'homme du métier et ne sera donc pas décrit plus en détail. Le semoir (1) selon l'invention est un semoir du type mécanique ainsi les graines tombent par gravité dans la terre. Afin de permettre auxdits éléments d'implantation (7) de suivre les dénivellations du sol, les tubes d'alimentation (8) sont télescopiques. Chaque ligne de semis est fournie en graines par son propre tube d'alimentation (8).

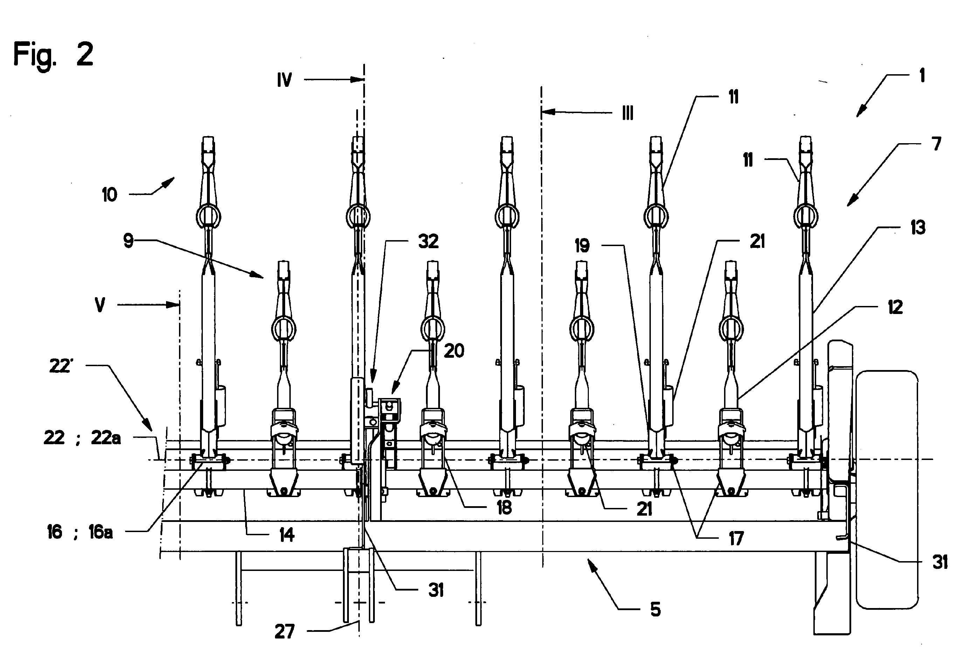

Lesdits éléments d'implantation de graines dans le sol (7), selon l'exemple de réalisation représenté aux figures 1 et 2, sont disposés sensiblement à l'arrière et sensiblement en dessous de la trémie (6). Lesdits éléments d'implantation (7) sont disposés, de préférence, selon deux rangées (9, 10) sensiblement perpendiculaires à la direction d'avance (4). Lesdits éléments d'implantation (7) sont espacés de telle sorte qu'il y a des intervalles assez réguliers entre les lignes dans lesquelles sont déposées les graines.

A la lumière des différentes figures, chaque élément d'implantation (7) porte un soc de semis (11) qui est fixé à l'extrémité d'un bras de liaison respectif (12, 13). Chaque rangée (9, 10) comporte donc plusieurs socs de semis (11) situés l'un à coté de l'autre de manière à former une rangée. La première rangée (9) est située devant la deuxième rangée (10) compte tenu de la direction d'avance (4). Les bras de liaison (12, 13) sont destinés à être liés à une poutre transversale (14) solidaire du châssis (5) au moyen d'une articulation respective (15, 16). Chaque articulation (15, 16) présente un axe longitudinal (15a, 16a) sensiblement horizontal et orthogonal à la direction d'avance (4). Lesdits bras de liaison (12, 13) sont avantageusement tubulaires et de section transversale circulaire. Ils s'étendent, à partir de leur articulation (15, 16) respective, vers l'arrière du semoir (1) dans le sens opposé à la direction d'avance (4) sensiblement parallèlement à cette dernière, et sensiblement horizontalement.

D'après la vue de dessus du semoir (1) représentée sur la figure 2, chaque soc de semis (11) appartenant à la première rangée (9) est soutenu par un bras de liaison court (12). Ce bras de liaison court (12) est lié à ladite poutre transversale (14) au moyen d'une première articulation (15). Chaque soc (11) appartenant à la deuxième rangée (10) est soutenu, quant à lui, par un bras de liaison long (13). Ce bras de liaison long (13) est lié à ladite poutre transversale (14) au moyen d'une deuxième articulation (16). Ladite poutre transversale (14) supporte tous les bras de liaison (12, 13). Cette poutre transversale (14) est tubulaire et de section carrée, elle s'étend sur toute la largeur du semoir (1), elle est disposée transversalement à la direction d'avance (4). La figure 2 est une vue de dessus partielle, le semoir (1) n'est pas représenté avec toute sa largeur. Sur la poutre transversale (14) sont montées à des intervalles réguliers des brides (17) destinées à maintenir les différents bras de liaison (12, 13). Ces brides (17) sont identiques mais elles sont montées pivotées d'un quart de tour selon qu'elles portent un bras de liaison court (12) ou un bras de liaison long (13). Ce décalage permet avantageusement un chevauchement des brides (17) pour éventuellement resserrer l'espace entre les bras de liaison (12, 13). Chaque bras de liaison (12, 13) est lié à ladite bride correspondante (17) par l'intermédiaire d'une chape (18, 19). Ces chapes (18, 19) sont fixées aux extrémités des bras de liaison correspondants (12, 13). Les premières et les deuxièmes articulations (15, 16) sont disposées entre ladite chape correspondante (18, 19) et la bride respective (17).

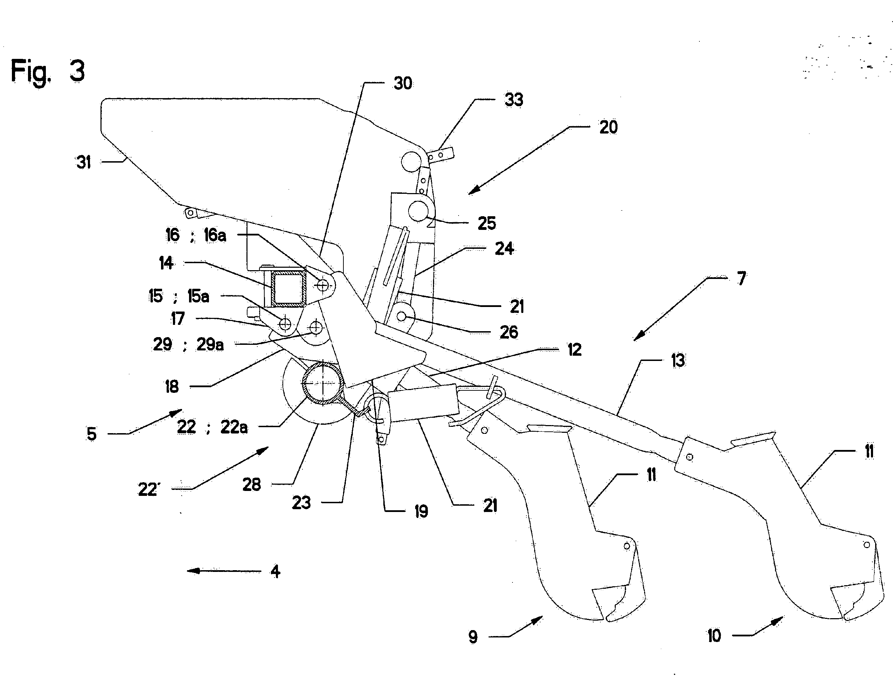

La figure 3 représente une vue partielle du semoir (1) selon la flèche III de la figure 2. La première articulation (15) et la deuxième articulation (16) permettent aux bras de liaison (12, 13) respectifs un débattement vers le haut et vers le bas. De telles articulations (15, 16) permettent avantageusement aux socs de semis (11) de suivre les dénivellations du sol et donc d'implanter les graines dans le sol à une profondeur sensiblement constante. D'une manière préférentielle, les premières articulations (15) sont disposées sensiblement sous ladite poutre transversale (14) alors que les deuxièmes articulations (16) sont disposées dans le prolongement à l'arrière de ladite poutre transversale (14).

Selon une importante caractéristique, pour assurer une bonne pénétration des socs de semis (11) dans le sol, il est prévu d'équiper le semoir d'un dispositif de réglage de la pression de terrage (20). Ce dernier permet d'exercer une force sur les éléments d'implantation (7) dirigée vers le bas en direction du sol par l'intermédiaire d'éléments élastiques (21). A cet effet, les éléments élastiques (21) sont reliés à un arbre pivot (22). D'après l'exemple de réalisation représenté à la figure 3, l'arbre pivot (22) s'étend sur toute la largeur du semoir (1) et présente un axe longitudinal (22a) au moins sensiblement horizontal et perpendiculaire à la direction d'avance (4). L'arbre pivot (22) est tubulaire et de section transversale circulaire. Pour maintenir les éléments élastiques (21), l'arbre pivot (22) comporte une tôle (23) pourvue de trous. Cette tôle (23) présente la même longueur que l'arbre pivot (22) correspondant sensiblement à la largeur du semoir (1). Ladite tôle (23) est liée sur le quart inférieur et arrière de l'arbre pivot (22). Chaque élément élastique (21) est lié d'une part à un bras de liaison (12, 13) et d'autre part à la tôle (23). Ladite tôle (23) comporte au moins autant de trous que d'éléments élastiques (21). Ces éléments élastiques (21) assurent le maintien des éléments d'implantation (7) dans le sol lors du travail. L'arbre pivot (22) est avantageusement disposé en dessous de la poutre transversale (14). Sa position est telle que son axe longitudinal (22a) soit sensiblement disposé à la verticale dudit axe longitudinal (16a) de la deuxième articulation (16) en direction du sol. L'intensité de la force développée par les éléments élastiques (21) peut être réglée au moyen de l'arbre pivot (22) afin d'être adaptée aux conditions du terrain. Cet arbre pivot (22) est donc susceptible de pivoter autour de son axe longitudinal (22a).

Le dispositif de réglage de la pression de terrage (20) comprend, à cet effet, une tige (24) permettant de commander le pivotement de l'arbre pivot (22) et donc de commander la pression de terrage sur tous les éléments d'implantation (7). Le dispositif de réglage de la pression de terrage (20) comporte en sus de la tige (24), une douille (25) et un tourillon (26). Cette tige (24) est avantageusement disposée au voisinage du plan vertical médian (27) du semoir (1). La tige (24) est liée à l'arbre pivot (22) au moyen d'un support (28). Ce support (28) solidaire de la partie centrale dudit arbre pivot (22). La tige (24) permet ainsi un réglage de la pression de terrage centralisé. D'après la figure 3, lorsque l'arbre pivot (22) effectue une rotation dans le sens horaire, la tension de chaque élément élastique (21) augmente et ainsi la pression de terrage sur les bras de liaison (12, 13) est plus élevée. Ceci permet d'ajuster la pression de terrage pour qu'elle soit supérieure à l'effort du sol exercé sur le soc de semis (11). Un pivotement de l'arbre pivot (22) dans le sens anti-horaire réduit la tension sur des éléments élastiques (21) et diminue la pression de terrage sur les éléments d'implantation (7).

D'une manière préférentielle, ladite poutre transversale (14) est articulée sur ledit châssis (5) au moyen d'au moins une troisième articulation (29) d'axe (29a) longitudinal sensiblement horizontal et transversal à la direction d'avance (4). Le pivotement de la poutre transversale (14), supportant les articulations (15, 16) des bras de liaison (12, 13), par rapport audit châssis (5) permet de modifier la profondeur de pénétration des socs de semis (11) dans le sol.

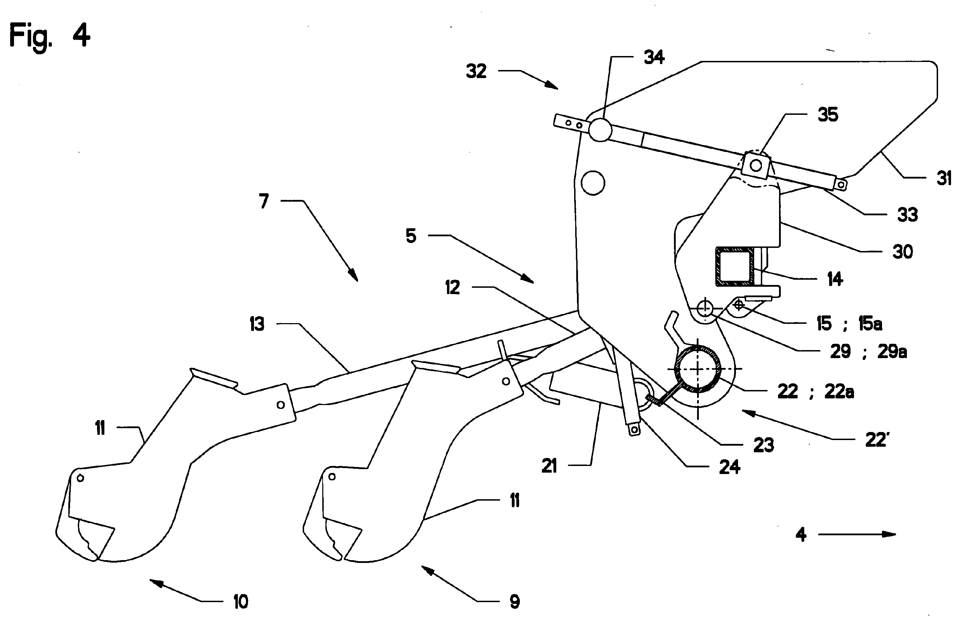

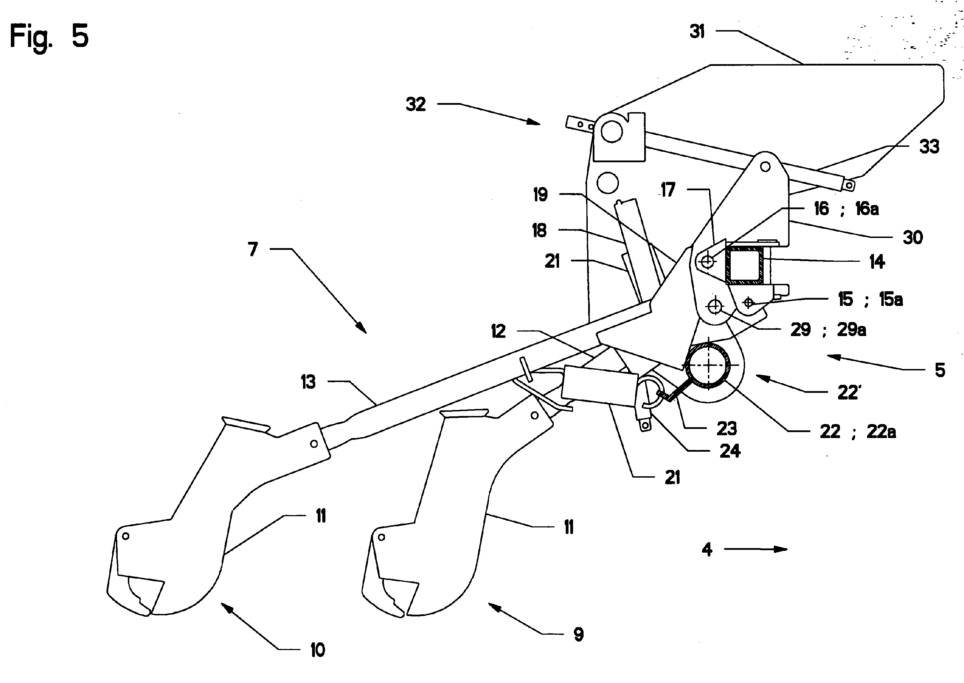

La figure 4 est une vue de côté suivant la flèche IV de la figure 2 d'une partie du semoir (1). La figure 5 montre, vu suivant la flèche V, une autre vue de côté du semoir (1) de la figure 2. A la lumière de ces figures, on peut voir que ladite troisième articulation (29) est disposée en dessous de la poutre transversale (14) et en arrière de celle-ci compte tenu de la direction d'avance (4). Selon l'exemple de réalisation représenté, la poutre transversale (14) est montée sur une chape basculante (30). Cette dernière est liée au châssis (5) au moyen de ladite troisième articulation (29). Le châssis (5) comporte encore des parois (31), dont deux sont disposées aux extrémités au voisinage des roues du semoir (1). Une autre paroi (31) est disposée au voisinage du plan vertical médian (27) du semoir (1). Chaque paroi (31) est destinée à supporter ladite poutre transversale (14) au moyen d'une chape basculante (30), liée à la paroi correspondante (31) au moyen d'une troisième articulation respective (29).

Les figures 3 à 5 représentent un exemple de réalisation de la paroi centrale (31) avec sa chape basculante (30) et sa troisième articulation (29). Les troisièmes articulations (29) disposées sur les parois des extrémités (31) sont sensiblement identiques et ne sont donc pas représentées.

Selon une autre importante caractéristique de l'invention, il est encore prévu un dispositif de réglage de la profondeur de travail (32) constitué de ladite poutre transversale (14) supportant lesdites articulations (15, 16). Le pivotement de ladite poutre transversale (14) autour de la troisième articulation (29) est commandé par ledit dispositif de réglage (32). Ce dernier permet de modifier la profondeur de pénétration des éléments d'implantation (7) dans le sol et donc la profondeur de semis. Ce dispositif de réglage de la profondeur de travail (32) est aussi avantageusement composé d'une tige (33), d'une douille (34) et d'un tourillon (35). La tige (33) est semblable à la tige (24). Dans l'exemple de réalisation représenté, la tige (24) présente une orientation plutôt verticale alors que la tige (33) présente une orientation plutôt horizontale. La douille (34) est solidaire de la paroi centrale (31) et le tourillon (35) est solidaire de la chape oscillante (30). Une extrémité de la tige (33) est engagée dans la douille (34) jusqu'à venir en butée contre un épaulement. Ladite tige (33) est sécurisée par une goupille. L'autre extrémité de la tige (33) est destinée à s'engager dans le tourillon (35). La tige (33) et le tourillon (35) sont filetés permettant ainsi un réglage fin et continu de la profondeur de pénétration dans le sol de l'ensemble des socs de semis (11). Lorsque la poutre transversale (14) pivote autour de la troisième articulation (29) grâce au dispositif de réglage (32), le débattement de la totalité desdits socs de semis (11) est modifié de la même valeur. Le dispositif de réglage de la profondeur de travail (32) est également réalisé de manière centralisée. L'agencement des premières articulations (15) et des deuxièmes articulations (16) est réalisé de telle sorte que lors d'une modification du réglage, la variation se répercute de manière identique sur l'ensemble des éléments d'implantation (7) de la première ou de la deuxième rangée (9, 10).

Lorsque le sol est hétérogène, les socs de semis (11) risquent de s'enfoncer trop profondément dans les zones plus meubles et donc de déposer la semence de manière irrégulière. Il est prévu une butée commune (22') limitant l'enfoncement de l'ensemble des socs de semis (11) dans le sol, limitant la pénétration dans le sol. D'une manière particulièrement avantageuse, cette butée commune (22') est réalisée par l'arbre pivot (22). D'après la figure 5, l'arbre pivot (22) s'étend, de préférence, sous les bras de liaison longs (13) et sous les bras de liaison courts (12) de manière à agir sur l'ensemble des éléments d'implantation (7) et à limiter le débattement de l'ensemble des socs de semis (11) vers le bas. Chaque bras de liaison (12, 13) s'appuie directement sur ledit arbre pivot (22) dans la position de travail représentée aux figures 3 et 5 par l'intermédiaire desdites chapes respectives (18, 19). Ces chapes (18, 19) sont en appui contre l'arbre pivot (22) sous l'effet des éléments élastiques (21), lesdites chapes (18, 19) comportent à cet effet une surface de contact de forme appropriée. Le pivotement des bras de liaison (12, 13) autour de leurs articulations respectives (15, 16) est ainsi limité vers le bas. La position des articulations (15, 16) et des surfaces d'appui des chapes (18, 19) est telle que lors d'une rotation de l'arbre pivot (22) ou d'un pivotement de la poutre transversale, la modification ainsi obtenue est identique voire sensiblement identique pour les socs de semis (11) de la première rangée (9) et de la deuxième rangée (10).

Selon un exemple de réalisation non représenté, il est possible que les articulations (15, 16) des bras de liaison (12, 13) soient alignées et la cinématique pour les deux dispositifs de réglage (20 ; 32) devrait être adaptée pour assurer une variation identique sur les deux rangées (9, 10).

A la lumière des figures 3 et 5, les éléments élastiques (21) des éléments d'implantation (7) de la rangée avant (9) sont avantageusement disposés sensiblement au-dessus des bras de liaison courts (12). Chaque première chape (18) comporte à cet effet, une partie courbée vers le haut qui porte l'élément élastique (21). La variation de pression en fonction de la hauteur des socs de semis (11) est ainsi limitée et est sensiblement identique entre la première et la deuxième rangées (9, 10). Cette disposition permet de mieux équilibrer la pression de terrage des deux rangées (9, 10). Les éléments élastiques (21) sont avantageusement des ressorts.

D'après la figure 3, les chapes (18, 19) des bras de liaison (12, 13) sont positionnées de manière à assurer un semis régulier et une profondeur de semis constante lors du travail. La première chape (18) liée au bras de liaison court (12) présente une forme de « U » dont les extrémités sont liées à la première articulation (15) et dont la base est fixée audit bras de liaison court (12). Ladite première chape (18) est sensiblement horizontale et placée dans le sens d'avance (4). Les pattes du « U » sont dirigées vers l'avant en partant du bras de liaison court (12). Un côté de ces pattes est destiné à venir en appui contre l'arbre pivot (22). La forme du contact est avantageusement une surface en arc de cercle. La deuxième chape (19) liée au bras de liaison long (13) présente, pour sa part, aussi une forme de « U » mais celle-ci est orientée différemment. La base du « U » est dirigée vers la poutre transversale (14) et les pattes du « U » sont disposées vers l'arrière compte tenu de la direction d'avance (4). D'autre part, c'est la base du « U » qui vient en contact avec l'arbre pivot (22) lors du travail. Comme représenté sur la figure 3, la surface de contact des éléments d'implantation (7) appartenant à la première rangée (9) se trouve plutôt sur la partie au-dessus de l'arbre pivot (22) alors que la surface de contact d'un élément d'implantation (7) de la deuxième rangée (10) est située plutôt sur la partie arrière dudit arbre pivot (22).

En pivotant la poutre transversale (14) autour des troisièmes articulations (29), on peut régler la profondeur de travail des éléments d'implantation (7). Un pivotement dans le sens horaire de la poutre transversale (14) permet de relever les éléments d'implantation (7). Le pivotement dans le sens anti-horaire permet par contre de baisser les éléments d'implantation (7).

Grâce à ce dispositif de réglage de la profondeur de travail (32) et le dispositif de réglage de la pression de terrage (20), la profondeur de pénétration des éléments d'implantation dans le sol (7) est semblable sur toute la largeur du semoir (1), et par conséquent les graines sont déposées à une profondeur idéale pour la germination et la croissance qui sont celles d'un rendement optimal lors de la récolte.

Le dispositif de réglage de la pression de terrage (20) est réalisé par l'intermédiaire de la tige (24), de la douille (25) et du tourillon (26). La douille (25) est solidaire de la paroi centrale (31) et le tourillon (26) est solidaire du support (28). Une extrémité de la tige (24) est engagée dans la douille (25) jusqu'à venir en butée contre un épaulement. Elle est sécurisée par une goupille. L'autre extrémité de la tige (24) est destinée à s'engager dans le tourillon (26). La tige (24) et le tourillon (26) sont filetés permettant ainsi un réglage fin et continu de la pression de terrage. La douille (25) est semblable à la douille (34) et le tourillon (26) est semblable au tourillon (35). L'arbre pivot (22) permet de régler la tension des éléments élastiques (21) et de faire office de butée basse commune (22').

Le positionnement des deux dispositifs de réglage (20, 32) près du plan vertical médian (27) du semoir (1) permet une meilleure répartition des efforts. Il est tout à fait possible que ces dispositifs de réglage (20, 32) soient disposés d'un côté du semoir (1). Les manipulations des tiges (24, 33) peuvent être réalisées via un système mécanique, hydraulique ou électrique.

Selon un autre exemple de réalisation non représenté, le semoir (1) pourrait être équipé uniquement du dispositif de réglage de la pression de terrage (20) alors que la poutre transversale (14) supportant les bras de liaison (12, 13) serait liée de manière fixe sur le châssis (5).

Lors du travail, chaque soc de semis (11) creuse un sillon dans le sol et y dépose les graines. Ledit dispositif d'implantation est équipé d'une herse de recouvrement (36) disposée derrière les socs de semis (11). Celle-ci referme lesdits sillons après la dépose des graines. Le semoir (1) comporte également des traceurs latéraux (37) permettant de laisser des traces pour les traitements phytosanitaires ultérieurs.

Finalement, diverses modifications peuvent être apportées à l'exemple qui vient d'être décrit, notamment en ce qui concerne la constitution des divers éléments ou par substitution d'équivalents techniques, sans pour autant sortir du domaine de protection défini dans les revendications ci-après.

## Revendications

1. Semoir (1) comportant un châssis (5) présentant une poutre transversale (14) et des éléments d'implantation (7) de la semence dans le sol, lesquels étant constitués :
*de socs de semis (11) disposés suivant au moins deux rangées (9, 10) sensiblement orthogonales à la direction d'avance (4) ;
*de bras de liaison courts (12) supportant chacun un soc de semis (11) appartenant à l'une (9) desdites rangées (9, 10), chaque bras de liaison court (12) étant lié à ladite poutre transversale (14) au moyen d'une première articulation respective (15) ;
*de bras de liaison longs (13) supportant chacun un soc de semis (11) appartenant à l'autre rangée (10), chaque bras de liaison long (13) étant lié à ladite poutre transversale (14) au moyen d'une deuxième articulation respective (16) ;
*lesdites premières et deuxièmes articulations (15, 16) comportant un axe longitudinal (15a, 16a) sensiblement horizontal et orthogonal à la direction d'avance (4), chaque articulation (15, 16) permettant auxdits bras de liaison correspondant (12, 13) un débattement vers le haut et vers le bas ; et
*une butée commune (22') limitant le déplacement de l'ensemble des socs de semis (11) vers le bas ;
***caractérisé en ce* qu**'il est prévu un dispositif de réglage de la pression de terrage (20) constitué d'un arbre pivot (22) d'axe longitudinal (22a) s'étendant sur toute la largeur du semoir (1) et d'éléments élastiques (21) liant les bras de liaison (12, 13) audit arbre pivot (22) et que ladite butée commune (22') est réalisée par ledit arbre pivot (22).

2. Semoir selon la revendication 1, ***caractérisé en ce* que** l'arbre pivot (22) est susceptible de pivoter autour de son axe longitudinal (22a) pour modifier la tension des éléments élastiques (21).

3. Semoir selon la revendication 1, ***caractérisé en ce* qu**'il est prévu un dispositif de réglage de la profondeur de travail (32) constitué de ladite poutre transversale (14) supportant lesdites articulations (15, 16).

4. Semoir selon la revendication 3, ***caractérisé en ce* que** ladite poutre transversale (14) est susceptible de pivoter autour d'une troisième articulation (29) d'axe longitudinal (29a) pour modifier la profondeur de travail des socs de semis (11).

5. Semoir selon l'une quelconque des revendications 1 à 4, ***caractérisé en ce* que** l'arbre pivot (22) est disposé en dessous et sensiblement en arrière de la poutre transversale (14).

6. Semoir selon l'une quelconque des revendications 1 à 5, ***caractérisé en ce* que** le dispositif de réglage de la pression de terrage (20) et le dispositif de réglage de la profondeur (32) sont disposés au voisinage du plan vertical médian (27) du semoir (1).

7. Semoir selon l'une quelconque des revendications 1 à 6, ***caractérisé en ce* que** le dispositif de réglage de la pression de terrage (20) et le dispositif de réglage de la profondeur (32) comportent chacun une tige (24, 33), une douille (25, 34) et un tourillon (26, 35).

8. Semoir selon l'une quelconque des revendications 1 à 7, ***caractérisé en ce* que** lesdites premières articulations (15) des bras de liaison courts (12) sont disposées sensiblement en dessous de ladite poutre transversale (14) alors que lesdites deuxièmes articulations (16) des bras de liaison longs (13) sont disposées dans le prolongement à l'arrière de ladite poutre transversale (14).

9. Semoir selon l'une quelconque des revendications 1 à 8, ***caractérisé en ce* que** l'arbre pivot (22) est disposé sensiblement à la verticale de ladite deuxième articulation (16) en direction du sol.

10. Semoir selon l'une quelconque des revendications 1 à 9, ***caractérisé en ce* que** les éléments élastiques (21) reliant lesdits bras de liaison courts (12) audit arbre pivot (22) sont disposés sensiblement au-dessus dudit arbre pivot (22).

## Claims

1. Seed drill (1) comprising a frame (5) with a transverse beam (14) and elements (7) for planting seeds in the ground, the latter consisting:
* of sowing coulters (11) arranged in at least two rows (9, 10) substantially orthogonal to the direction of travel (4);
* of short link arms (12) each supporting one sowing coulter (11) belonging to one (9) of the said rows (9, 10), each short link arm (12) being connected to the said transverse beam (14) by means of a first respective articulation (15);
* of long link arms (13) each supporting one sowing coulter (11) belonging to the other row (10), each long link arm (13) being connected to the said transverse beam (14) by means of a second respective articulation (16);
* the said first and second articulations (15, 16) comprising a longitudinal axis (15a, 16a) substantially horizontal and orthogonal to the direction of travel (4), each articulation (15, 16) allowing the said corresponding link arms (12, 13) a range of movement upwards and downwards; and
* a common stop (22') limiting the downward movement of all the sowing coulters (11);
***characterized in* that** a depth control pressure adjustment device (20) is provided consisting of a pivot shaft (22) with a longitudinal axis (22a) extending across the whole width of the seed drill (1), and of elastic elements (21) connecting the link arms (12, 13) to the said pivot shaft (22), and that the said common stop (22') is achieved by the said pivot shaft (22).

2. Seed drill according to Claim 1, ***characterized in* that** the pivot shaft (22) is able of pivoting about its longitudinal axis (22a) in order to modify the tension of the elastic elements (21).

3. Seed drill according to Claim 1, ***characterized in* that** a working depth adjustment device (32) is provided consisting of the said transverse beam (14) supporting the said articulations (15, 16).

4. Seed drill according to Claim 3, ***characterized in* that** the said transverse beam (14) is able of pivoting about a third articulation (29) with a longitudinal axis (29a) in order to modify the working depth of the sowing coulters (11).

5. Seed drill according to any one of Claims 1 to 4, ***characterized in* that** the pivot shaft (22) is arranged beneath and substantially behind the transverse beam (14).

6. Seed drill according to any one of Claims 1 to 5, ***characterized in* that** the depth control pressure adjustment device (20) and the depth adjustment device (32) are arranged in the vicinity of the vertical mid-plane (27) of the seed drill (1).

7. Seed drill according to any one of Claims 1 to 6, ***characterized in* that** the depth control pressure adjustment device (20) and the depth adjustment device (32) each comprise a rod (24, 33), a socket (25, 34) and a pin (26, 35).

8. Seed drill according to any one of Claims 1 to 7, ***characterized in* that** the said first articulations (15) of the short link arms (12) are arranged substantially beneath the said transverse beam (14) while the said second articulations (16) of the long link arms (13) are arranged in the extension at the rear of the said transverse beam (14).

9. Seed drill according to any one of Claims 1 to 8, ***characterized in* that** the pivot shaft (22) is arranged substantially vertical to the said second articulation (16) in the direction of the ground.

10. Seed drill according to any one of Claims 1 to 9, ***characterized in* that** the elastic elements (21) connecting the said short link arms (12) to the said pivot shaft (22) are arranged substantially above the said pivot shaft (22).

## Patentansprüche

1. Sämaschine (1) mit einem Gestell (5), das einen Querträger (14) und Elemente (7) zum Einbringen von Samen in den Boden aufweist, die gebildet sind von:
* Säscharen (11), die in mindestens zwei Reihen (9, 10) im Wesentlichen orthogonal zur Vorschubrichtung (4) angeordnet sind;
* kurzen Verbindungsarmen (12), die jeweils eine Säschar (11) tragen, die einer (9) der Reihen (9, 10) angehört, wobei jeder kurze Verbindungsarm (12) mit dem Querträger (14) mittels eines jeweiligen ersten Gelenks (15) verbunden ist;
* langen Verbindungsarmen (13), die jeweils eine Säschar (11) tragen, die der anderen Reihe (10) angehört, wobei jeder lange Verbindungsarm (13) mit dem Querträger (14) mittels eines jeweiligen zweiten Gelenks (16) verbunden ist;
* wobei die erste und die zweite Gelenke (15, 16) eine im Wesentlichen horizontale und zur Vorschubrichtung orthogonale Längsachse (15a, 16a) umfassen, wobei jedes Gelenk (15, 16) den entsprechenden Verbindungsarmen (12, 13) ein Ausschlagen nach oben und nach unten ermöglicht; und
* einem gemeinsamen Anschlag (22'), der die Verschiebung der Gesamtheit der Säscharen (11) nach unten begrenzt;
***dadurch gekennzeichnet,* dass** eine Schardruckeinstellungsvorrichtung (20) vorgesehen ist, die von einer Schwenkwelle (22) mit einer Längsachse (22a), die sich über die gesamte Breite der Sämaschine (1) erstreckt, und von elastischen Elementen (21) gebildet ist, die die Verbindungsarme (12, 13) mit der Schwenkwelle (22) verbinden, und dass der gemeinsame Anschlag (22') von der Schwenkwelle (22) gebildet ist.

2. Sämaschine nach Anspruch 1, ***dadurch gekennzeichnet*, dass** die Schwenkwelle (22) um ihre Längsachse (22a) schwenken kann, um die Spannung der elastischen Elemente (21) zu ändern.

3. Sämaschine nach Anspruch 1, ***dadurch gekennzeichnet,* dass** eine Vorrichtung zur Einstellung der Arbeitstiefe (32) vorgesehen ist, die von dem Querträger (14) gebildet ist, der die Gelenke (15, 16) trägt.

4. Sämaschine nach Anspruch 3, ***dadurch gekennzeichnet,* dass** der Querträger (14) um ein drittes Gelenk (29) mit einer Längsachse (29a) schwenken kann, um die Arbeitstiefe der Säscharen (11) zu verändern.

5. Sämaschine nach irgend einem der Ansprüche 1 bis 4, ***dadurch gekennzeichnet,* dass** die Schwenkwelle (22) unter und im Wesentlichen hinter dem Querträger (14) angeordnet ist.

6. Sämaschine nach irgend einem der Ansprüche 1 bis 5, ***dadurch gekennzeichnet,* dass** die Schardruckeinstellungsvorrichtung (20) und die Vorrichtung zur Einstellung der Tiefe (32) in der Nähe der mittleren Vertikalebene (27) der Sämaschine (1) angeordnet sind.

7. Sämaschine nach irgend einem der Ansprüche 1 bis 6, ***dadurch gekennzeichnet,* dass** die Schardruckeinstellungsvorrichtung (20) und die Vorrichtung zur Einstellung der Tiefe (32) jeweils eine Stange (24, 33), eine Büchse (25, 34) und einen Drehzapfen (26, 35) umfassen.

8. Sämaschine nach irgend einem der Ansprüche 1 bis 7, ***dadurch gekennzeichnet,* dass** die ersten Gelenke (15) der kurzen Verbindungsarme (12) im Wesentlichen unter dem Querträger (14) angeordnet sind, während die zweiten Gelenke (16) der langen Verbindungsarme (13) in der Verlängerung hinter dem Querträger (14) angeordnet sind.

9. Sämaschine nach irgend einem der Ansprüche 1 bis 8, ***dadurch gekennzeichnet,* dass** die Schwenkwelle (22) im Wesentlichen in der Vertikalen des zweiten Gelenks (16) in Richtung des Bodens angeordnet ist.

10. Sämaschine nach irgend einem der Ansprüche 1 bis 9, ***dadurch gekennzeichnet,* dass** die elastischen Elemente (21), die die kurzen Verbindungsarme (12) mit der Schwenkwelle (22) verbinden, im Wesentlichen über der Schwenkwelle (22) angeordnet sind.
